# EUROPÄISCHE PATENTANMELDUNG

(11) **EP 3 609 142 A1**
(43) Veröffentlichungstag der Anmeldung: **12.02.2020**
(21) Anmeldenummer: 18187456.1
(22) Anmeldetag: 06.08.2018
(51) Int. Cl.: H04L 12/741, H04L 29/12, H04L 12/751

(54) **VERFAHREN ZUM AUTOMATISCHEN KONFIGURIEREN VON ROUTEN, VERFAHREN ZUR DATENKOMMUNIKATION, STEUERUNGSVERFAHREN, ROUTER, COMPUTERPROGRAMM UND COMPUTERLESBARES MEDIUM**

(71) Anmelder: Siemens Aktiengesellschaft, 80333 München (DE)
(72) Erfinder: Albrecht, Harald, 90475 Nürnberg (DE); Ehlis, Melanie, 90431 Nürnberg (DE); Höme, Stephan, 91126 Schwabach (DE)

(57) **Zusammenfassung**

Die Erfindung betrifft ein Verfahren zum automatischen Konfigurieren von Routen in einem insbesondere industriellen Netzwerk bevorzugt einer industriellen Automatisierungsanlage, bei dem von wenigstens einem unterlagerten Router (19, 20), insbesondere von einem DHCPv6 Client (24) dieses, wenigstens ein delegiertes Präfix (33) empfangen wird, und eine Sende-Funktionseinheit (25) des wenigstens einen unterlagerten Routers (19, 20) bevorzugt automatisch konfiguriert wird, wenigstens eine Router-Advertisement-Nachricht (34) mit einer More Specific Route Option (35), welche das wenigstens eine empfangene Präfix (33) und/oder wenigstens eine spezifische Route für dieses enthält, insbesondere über ein upstream-Interface (21) des wenigstens einen unterlagerten Routers (19, 20) zu senden. Darüber hinaus betrifft die Erfindung ein Verfahren zur Datenkommunikation, ein Steuerungsverfahren für einen industriellen technischen Prozess oder ein Fahrzeug, einen Router, ein Computerprogramm und ein computerlesbares Medium.

## Beschreibung

Verfahren zum automatischen Konfigurieren von Routen, Verfahren zur Datenkommunikation, Steuerungsverfahren, Router, Computerprogramm und computerlesbares Medium

Die Erfindung betrifft ein Verfahren zum automatischen Konfigurieren von Routen in einem insbesondere industriellen Netzwerk bevorzugt einer industriellen Automatisierungsanlage. Darüber hinaus betrifft die Erfindung ein Verfahren zur Datenkommunikation, ein Steuerungsverfahren für einen industriellen technischen Prozess oder ein Fahrzeug, einen Router, ein Computerprogramm und ein computerlesbares Medium.

Im Zuge der Bestrebungen zur Digitalisierung und Industrie 4.0 rückt die durchgängige Erreichbarkeit aller Netzwerkteilnehmer - beispielweise in einem Netz einer Automatisierungsanlage - wieder in den Blickpunkt. Durch die schiere Masse an Netzwerkteilnehmern, die entweder bereits vorhanden sind oder in den nächsten Jahren neu in Automatisierungsnetze hinzukommen werden, kommt einem möglichst effizienten Netzausbau eine besonders gewichtige Rolle zu.

Eine Herausforderung besteht dabei nicht allein in der bloßen Anzahl der Teilnehmer. Vielmehr müssen diese zudem organisiert werden, insbesondere, um die Betriebssicherheit des Netzes zu gewährleisten (Beispiel: Broadcast-Last). Dabei kommt insbesondere eine Organisation in Subnetze in Frage. Es ist jedoch davon auszugehen, dass die traditionell als ein einziges Subnetz hantierten Zellennetze rasch an Subnetz-Grenzen stoßen werden, so dass nach Erwartung der Anmelderin sowohl das Aufsplitten in mehrfache Subnetze als auch das weitere Unterteilen mittels Unter-Subnetzen erforderlich wird.

Problematisch ist, dass insbesondere bei beteiligten Zulieferern, beispielsweise von Robotersteuerungen mit ihren Unter-Subnetzen, Maschinenbauern, usw. sowie bei Atomatisierern, ein detailliertes Netzwerk- und IT-Know-How erforderlich wäre, um die benötigten Maschinen- oder Zellen-Router zu konfigurieren, in Betrieb zu setzen und zu pflegen. Vom Bestehen eines solchen Know-Hows kann aber in der Regel nicht ausgegangen werden.

Aus Sicht der Anmelderin ist es daher erstrebenswert, eine möglichst weit reichende Autokonfiguration solcher Maschinen- und Zellen-Router zu ermöglichen. Dabei sollen für Automatisierungsanwendungen typische Netzstrukturen bei einer Autokonfiguration korrekt berücksichtigt werden (können).

Der Anmelderin ist bekannt, dass der Netzaufbau im Bereich der Automatisierungstechnik oftmals derart ist, dass sich Endgeräte nicht alleine nur in den hierarchisch untersten Subnetzen befinden, sondern auch auf anderen Ebenen einer Netz-Hierarchie, auf den Zwischenebenen zwischen Routern.

Nach Auffassung der Anmelderin ist es erstrebenswert, dass in Netzstrukturen der Automatisierungstechnik aus Gründen der Verfügbarkeit die Endgeräte mit anderen (End-)Geräten in (weiteren) unterlagerten Netzen kommunizieren können. Insbesondere sollte diese Kommunikation nicht auf den jeweilig überlagerten Router angewiesen sein, wie es typischerweise aus Konfigurationsgründen in der IT der Fall ist.

Aus der allgemeinen IT sind eine Reihe von Autokonfigurationsmechanismen bekannt, vor allem im Kontext der IPv6-Technologie.

Aus dem RFC 3316 der IETF (Request for Comments Nummer 3316 der Internet Engineering Task Force, https://tools.ietf.org/html/rfc3316) ist das Prinzip der sogenannten "Präfix-Delegation" (engl.: "Prefix Delegation") bekannt. Gemäß diesem weist ein hierarchisch überlagerter Router - der sogenannte "delegating router" - einem hierarchisch unterlagerten Router - dem sogenannten "requesting router" - eines oder mehrere Subnetze automatisch zu.

Aus dem IETF-Standard-Entwurf RFC 3315 (https://tools.ietf. org/html/rfc3315) ist bekannt, dass entsprechend Dynamic Host Configuration Protocol for IPv6 (DHCPv6) von DHCP-Servern Konfigurationsparameter, wie IPv6-Adressen, zur Auswahl und Anforderung an Netzknoten übermittelt werden. Insbesondere ermöglicht DHCPv6 eine automatische Allokierung wiederbenutzbarer IPv6-Adressen und - im Gegensatz zur einer Stateless Adress Autoconfiguration (SLAAC) - eine zustandsbezogene Protokollierung momentan durch Netzknoten genutzter IPv6-Adressen.

In dem RFC 3633 (https://tools.ietf.org/ html/rfc3633) ist weiterhin ein Verfahren zur Delegation von IPv6-Präfixen auf Basis von DHCPv6 beschrieben. Dabei werden IPv6-Präfixe auf Anforderung durch einen delegierenden Router, der einen DHCP-Server darstellt bzw. als solcher fungiert, zur Verbreitung durch einen anfordernden Router, der einen DHCP-Client bildet bzw. als solcher fungiert, freigegeben. Dies kann insbesondere über administrative Grenzen hinweg erfolgen, ohne dass der delegierenden Router bzw. DHCP-Server über Topologie-Informationen eines Subnetzes/Teilnetzes verfügen muss, in dem freigegebene IPv6-Präfixe durch den anfordernden Router verbreitet werden.

Der Anmelderin ist bekannt, dass dabei in Heimnetzen wie folgt vorgegangen wird. Es wird ein höchstens /64 großes Präfix vom überlagerten Delegating Router beim Internet Service Provider (ISP) bezogen. Anschließend wird ein /64 Präfix aus dem delegierten Präfix an die unterlagerte Netzwerk-Schnittstelle - dem Heim-Netz - zugeordnet, um damit eine eindeutige IPv6-Adresse zu autokonfigurieren. Das /64 Präfix wird an der unterlagerten Netzwerk-Schnittstelle per Router Advertisement in Form einer sogenannten Prefix Information Option (PIO) zur Adress-Autokonfiguration (Stateless Address Autoconfiguration -SLAAC) in den angeschlossenen Endgeräten bekanntgegeben.

Der Verkehr zu den einzelnen Heim-Routern wird durch Access- bzw. Distributor-Router gebündelt und kontrolliert. Eine direkte Kommunikation zwischen benachbarten Heim-Routern ist nicht vorgesehen bzw. nicht möglich.

Der Anmelderin ist weiterhin bekannt, dass in anderen Anwendungsfällen Router vollständig manuell konfiguriert werden.

Eine Aufgabe der vorliegenden Erfindung besteht darin, eine Möglichkeit zum automatischen Konfigurieren von Routen in einem Netzwerk einer industriellen Automatisierungsanlage zu schaffen, welche einen effizienten Betrieb und eine erhöhte Betriebs- und Ausfallsicherheit gewährleistet.

Diese Aufgabe wird gelöst durch ein Verfahren zum automatischen Konfigurieren von Routen in einem industriellen Netzwerk insbesondere einer industriellen Automatisierungsanlage, bei dem von wenigstens einem unterlagerten Router, insbesondere von einem DHCPv6 Client dieses, wenigstens ein delegiertes Präfix empfangen wird, und eine Sende-Funktionseinheit des unterlagerten Routers bevorzugt automatisch konfiguriert wird, wenigstens eine Router-Advertisement-Nachricht mit einer More Specific Route Option, welche das wenigstens eine empfangene Präfix und/oder wenigstens eine spezifische Route für dieses enthält, insbesondere über ein upstream-Interface des wenigstens einen unterlagerten Routers zu senden.

Die Aufgabe wird darüber hinaus gelöst durch einen Router, der zur Durchführung des erfindungsgemäßen Verfahrens ausgestaltet und eingerichtet ist. Der erfindungsgemäße Router umfasst dazu insbesondere eine Specific-Route-Management-Funktionseinheit, welche ausgebildet und/oder eingerichtet ist, um von dem Router, insbesondere einem DHCPv6 Client dieses empfangene Präfixe übergeben zu bekommen, und um eine Sende-Funktionseinheit des Routers bevorzugt automatisch zu konfigurieren, wenigstens eine Router-Advertisement-Nachricht mit einer More Specific Route Option, welche das wenigstens eine empfangene Präfix und/oder wenigstens eine spezifische Route für dieses enthält, insbesondere über ein upstream-Interface des Routers zu senden.

Insbesondere die Specific Route Management Funktionseinheit konfiguriert mit anderen Worten die Sende-Funktionseinheit des Routers für das Senden von Router Advertisement Nachrichten dahingehend, dass spezifische Routen für delegierte Präfixe korrekt ausgesendet werden.

Die vorliegende Erfindung ermöglicht somit eine Autokonfigurierung von spezifischen Routen in unterlagerten Routern eines Netzwerkes insbesondere einer Automatisierungslösung. Durch die erfindungsgemäße Autokonfigurierung können Netzwerk-Teilnehmer automatisiert direkte, spezifische Routen auch auf Teilnehmer, die sich insbesondere in der gleichen Hierarchieebene befinden und/oder Nachbarn sind, einrichten und aktuell halten, wodurch es möglich wird, dass diese Teilnehmer einen Datenverkehr direkt zwischen sich abwickeln können, ohne auf einen überlagerten, beispielsweise zentralen Router angewiesen zu sein. Die Kommunikationspfade werden durch spezifische Routen optimiert. Da für den Datenaustausch zwischen unterlagerten Teilnehmern ein Rückgriff auf überlagerte Router nicht mehr nötig ist, hat ein potentieller Ausfall solcher keinerlei Auswirkungen auf die Kommunikation in unterlagerten Netzen, so dass eine deutlich erhöhte Betriebs- und Ausfallsicherheit gewährleistet wird. Dies ist insbesondere für Netze ein erheblicher Vorteil, die mehrere Subnetze umfassen, wie es im Bereich der industriellen Automatisierung der Fall sein kann bzw. nach Einschätzung der Anmelderin in absehbarer Zukunft oftmals der Fall sein wird. Die erfindungsgemäße Vorgehensweise ermöglicht insbesondere auch für die speziellen Netzstrukturen in diesem Bereich einen effizienten, besonders sichereren Betrieb. Dabei ist kein spezielles Netzwerk- bzw. IT-Know-How seitens der Anwender bzw. Betreiber - etwa einer Automatisierungsanlage - nötig, sondernd die spezifischen Routen werden automatisch bekanntgegeben und insbesondere aktuell gehalten.

Dabei wird die Sende-Funktionseinheit bevorzug in Reaktion auf den Empfang wenigstens einer insbesondere von einem DHCPv6 Server gesendeten Confirm-Nachricht automatisch konfiguriert, wenigstens eine Router-Advertisement-Nachricht mit einer More Specific Route Option, welche das wenigstens eine empfangene Präfix und/oder wenigstens eine spezifische Route für dieses enthält, insbesondere über ein upstream-Interface zu senden. Bei der wenigstens einen Confirm-Nachricht handelt es sich bevorzugt um eine solche gemäß RFC 3315.

Eine in Reaktion auf den Empfang wenigstens einer Confirm-Nachricht gesendete wenigstens eine Router-Advertisement-Nachricht muss nicht sofort, ohne Verzögerung nach dem Erhalt wenigstens einer Confirm-Nachricht gesendet werden. Vielmehr kann es sein, dass diese verzögert zum Empfangszeitpunkt einer Confirm-Nachricht gesendet wird, beispielsweise zu einem Zeitpunkt nach dem Eingang einer solchen, für den das Senden der nächsten Router-Advertise-Nachricht ohnehin geplant bzw. vorgesehen war, oder auch zu einem anderen vorgegeben Zeitpunkt nach dem Empfang eines Confirms.

Unter einem unterlagerten Router ist insbesondere ein solcher zu verstehen, der eines oder mehrere Subnetze verantwortet, die sich alle innerhalb eines von einem überlagerten Router verantworteten Adressbereich befinden.

Unter einem Subnetz ist insbesondere ein IP-Subnetz zu verstehen, also ein Teilnetz eines Netzwerkes beim Internetprotokoll (IP). Ein Subnetz fasst in der Regel mehrere aufeinanderfolgende IP-Adressen mittels einer Subnetzmaske an binären Grenzen unter einem gemeinsamen Vorderteil, dem sogenannten Präfix zusammen. Im Falle von IPv6 spricht man bei der Subnetzmaske auch von der Präfixlänge. Ein Schema zur Unterteilung von Netzen wurde 1985 eingeführt und 1992 im RFC 950 erstmals standardisiert.

Eine spezifische Route ist insbesondere im Gegensatz zu einer (unspezifischen) Default Route zu verstehen. Eine spezifische Route verweist auf einen bestimmten Adressbereich, wohingegen eine Default Route "alles einsammelt", was nicht durch spezifische(re) Routen erfasst wird. Eine Default Route definiert insbesondere die zu verwendende Paketweiterleitungsregel, wenn keine spezifische Route (engl.: specific route) für eine gegebene Internet Protokoll (IP) Zieladresse (engl.: destination address) bestimmt werden kann.

Gemäß dem IPv6 Standard ist es möglich, Endgeräten jederzeit nicht nur die Default Route mitzuteilen, sondern auch spezifische Routen, insbesondere auf unterlagerte Subnetze. Dazu dient die im RFC 4191 (https://tools.ietf.org/html/rfc4191) definierte zusätzliche More-Specific Route Option (MSRO) in Router Advertisement Nachrichten (auch als Router Advertisements bezeichnet). Bei der More Specific Route Option (MSRO), die erfindungsgemäß von einem unterlagerten Router, der wenigstens ein delegiertes Präfix erhalten hat, automatisch konfiguriert und insbesondere über ein upstream-Interface gesendet wird, handelt es sich insbesondere um eine More Specific Route Option gemäß RFC 4191, insbesondere um die in Punkt 2.3 des RFC 4191 beschriebenen "Route Information Option"..

Unter einem delegierten Präfix ist insbesondere ein solches im Sinne gemäß RFC 3633 zu verstehen. Bevorzugt wird wenigstens ein delegiertes Präfix von einem DHCPv6 Präfix Delegation (PD) Client des Routers empfangen. Ein Präfix umfasst insbesondere eine Adresse und eine Präfixlänge (vgl. RFC 4291).

Die wenigstens eine Router-Advertisement-Nachricht mit einer More Specific Route Option, welche das wenigstens eine empfangene Präfix und/oder wenigstens eine spezifische Route für dieses enthält, wird insbesondere an wenigstens einen Nachbar-Teilnehmer gesendet. Unter Nachbar-Teilnehmern sind sind Netzwerk-Teilnehmer zu verstehen, die Nachbarn im Sinne des RFC 4861 der IETF sind, das heißt Knoten/Geräte, die sich an demselben Link (siehe ebenfalls RFC 4861) befinden. Nachbarn können beispielsweise in Form benachbarter Router, benachbarter Endgeräte (ggf. mit Router-Funktion) bzw. benachbarter Router und Endgeräte vorliegen. Ein Router sendet beispielsweise an einen oder mehrere Nachbar-Router und/oder Nachbar-Endgeräte eine oder mehrere Router Advertisement Nachrichten mit einer More Specific Route Option, welche das wenigstens eine Präfix enthält oder durch dieses gebildet wird. Router trennen verschiedene Subnetze. Nachbarn im Rahmen des erfindungsgemäßen Verfahrens können insbesondere durch Teilnehmer in einem gemeinsamen ("Zwischen-")Subnetz, von dem über Router unterlagerte Subnetze abzweigen, gegeben sein.

Bei dem wenigstens einen unterlagerten Router handelt es sich insbesondere um einen Subnetz-Router und das wenigstens eine von dem wenigstens einen unterlagerten Router empfangene Präfix ist bevorzugt ein Subnetz-Präfix.

Das wenigstens eine Präfix, welches von dem wenigstens einen unterlagerten Router empfangen wird, wird bzw. wurde weiterhin bevorzugt von einem überlagerten Router gesendet. Das wenigstens eine Präfix, welches von dem wenigstens einen unterlagerten Router empfangen wird, kann von diesem zuvor angefordert worden sein.

Weiterhin bevorzugt ist vorgesehen, dass von dem wenigstens einen unterlagerten Router periodisch Router Advertisement Nachrichten gesendet werden. Alternativ oder zusätzlich können von dem wenigstens einen unterlagerten Router periodisch Präfixe angefordert und/oder empfangen werden.

Unter einem Router ist, insbesondere im Sinne des IETF-Standard-Entwurfes RFC 4861, jeder Knoten (bzw. jedes Gerät) zu verstehen, welcher IP Pakete weiterleitet (forwarded), die nicht explizit an ihn adressiert sind.

Bei einem Router kann es sich beispielsweise um ein (separates) Gerät bzw. eine (separate) Hardware-Komponente handeln, welche ausgebildet und/oder eingerichtet ist, dieses Funktion zu erfüllen. Selbstverständlich ist es auch möglich, dass ein Router als "Software-Router" bzw. "Soft-Router" vorliegt, etwa in Form eines Computerprogrammes bzw. einer Computerprogramm-Sammlung, die auf einer zu dessen/deren Ausführung ausgebildeten Einrichtung, etwa einem PC oder einer anderen Recheneinrichtung oder einem beliebigen anderen Gerät, abgelegt ist. Ein Router bzw. die Router-Funktion kann beispielsweise auch in eine Steuerung, etwa eine speicherprogrammierbare Steuerung (SPS) eines Automatisierungssystems oder in ein anderes Gerät integriert sein, dies sowohl in Form von Hardware- als auch Software.

Unter den Begriff Router im Sinne der vorliegenden Anmeldung fallen sämtliche der vorgenannten Möglichkeiten, insbesondere auch "Soft-Router" sowie Geräte, die eigentlich andere Funktionen ausführen bzw. einem anderen Zweck dienen, aber auch eine Router-Funktion übernehmen, also auch Daten weiterleiten, die nicht explizit an sie adressiert sind. Zum Beispiel ist auch eine Steuerung, etwa speicherprogrammierbare Steuerung, welche zur Durchführung des erfindungsgemäßen Verfahrens zum automatischen Konfigurieren von Routen ausgebildet und/oder eingerichtet ist, als Router gemäß der vorliegenden Erfindung zu erachten, bzw. wenn in diese eine separate Einrichtung, die entsprechend ausgebildet und/oder eingerichtet ist, integriert ist, umfasst eine solche Steuerung einen Router nach der vorliegenden Erfindung.

Bei einem upstream-Interface, also einer upstream-Schnittstelle eines Routers handelt es sich insbesondere um ein Interface, welches in Richtung wenigstens eines überlagerten Subnetzes und/oder Routers zeigt. Ein downstream-Interface ist insbesondere ein solches, welches in Richtung wenigstens eines unterlagerten Subnetzes zeigt.

Üblicherweise hat ein Router wenigstens ein upstream-Interface und wenigstens ein downstream-Interface. Es kann aber auch sein, dass ein Router nur ein einziges (physisches) Interface aufweist, und die Unterscheidung zwischen up- und downstream allein Software-basiert erfolgt. Als Interface kann ein Port eines Routers dienen.

Die Sende-Funktionseinheit des wenigstens einen unterlagerten Routers ist insbesondere für das korrekte Abwickeln des Router-Advertisement-Protokolls ausgebildet und/oder eingerichtet. Die Sende-Funktionseinheit kann eine Kombination von Hard- und Software umfassen oder auch rein Software-oder rein Hardware-implementiert sein. Diese kann beispielsweise in Form eines Router Advertisement Daemon (RAD oder radvd) gegeben sein, ggf. in Kombination mit geeigneter Hardware.

Es kann prinzipiell sein, dass in einem Netzwerk nur ein unterlagerter Router erfindungsgemäß Router Advertisement Nachrichten mit einer MSRO mit wenigstens einem delegierten Präfix und/oder wenigstens einer spezifischen Route für dieses bevorzugt über ein upstream-Interface sendet. Selbstverständlich ist es aber auch möglich, dass mehrere unterlagerte Router, auch alle unterlagerten Router in einem Netzwerk dies tun, um jeweils insbesondere von Nachbar-Teilnehmern auf direktem Wege erreichbar zu sein.

In bevorzugter Ausgestaltung des erfindungsgemäßen Verfahrens ist vorgesehen, dass in der wenigstens einen Router Advertisement Nachricht, welche insbesondere über ein upstream-Interface gesendet wird, eine Lebenszeit (engl.: lifetime) für die More Specific Route Option angegeben wird, die entsprechend einer Lebenszeit des wenigstens einen empfangenen Präfixes gewählt ist. Bei der Lebenszeit, die für die More Specific Route Option angegeben wird, handelt es sich insbesondere um die sogenannte "Route Lifetime" der MSRO, die in RFC 4191 definiert ist.

Die "Route Lifetime" in der MSRO wird gemäß diesem Ausführungsbeispiel entsprechend einer Lebenszeit des wenigstens einen vom Router erhaltenen Präfixes gewählt. Vorzugsweise werden mit wenigstens einem delegierten Präfix eine gültige Lebenszeit (engl.: "valid lifetime") und eine bevorzugte Lebenszeit (engl.: "preferred lifetime") übermittelt(vgl. RFC 3633). Als Lebenszeit für die More Specific Route Option wird bevorzugt die gültige Lebenszeit (engl.: "valid lifetime") insbesondere gemäß RFC 3633 verwendet.

Weiterhin bevorzugt werden für den Fall, dass sich das wenigstens eine Präfix, welches von dem wenigstens einen unterlagerten Router empfangen wird, ändert, von dem wenigstens einen unterlagerten Router geänderte Router Advertisement Nachrichten insbesondere über ein upstream-Interface gesendet.

Besonders bevorzugt ist vorgesehen, dass Präfixe, die von dem wenigstens einen unterlagerten Router empfangen wurden, insbesondere von einem DHCPv6 Client des wenigstens einen unterlagerten Routers, für eine jeweils vorgegebene Dauer gespeichert und dann gelöscht werden.

Weiterhin kann vorgesehen sein, dass für den Fall, dass kein Präfix verfügbar ist, von dem wenigstens einen unterlagerten Router Router Advertisement Nachrichten ohne eine More Specific Route Option insbesondere über ein upstream-Interface gesendet werden.

Der erfindungsgemäße Router, insbesondere ein DHCPv6 Client des erfindungsgemäßen Routers, ist entsprechend in Weiterbildung ausgebildet und/oder eingerichtet, um empfangene Präfixe für eine jeweils vorgegeben Dauer zu speichern und dann zu löschen.

Die Specific-Route-Management-Funktionseinheit des Routers ist bevorzugt ausgebildet und/oder eingerichtet, um die Sende-Funktionseinheit für den Fall, dass kein Präfix verfügbar ist, bevorzugt automatisch zu konfigurieren, Router Advertisement Nachrichten ohne eine More Specific Route Option insbesondere über ein upstream-Interface des Routers zu senden.

Dass kein Präfix etwa in einem Speicher des Routers verfügbar ist, kann insbesondere in einem Initialzustand der Fall, beispielsweise noch vor Erhalt einer ersten, insbesondere von einem DHCPv6 Server an den Router gesendeten Confirm Nachricht gemäß RFC 3315 der Fall sein.

Weiterhin kann vorgesehen, dass in Reaktion auf den Empfang wenigstens einer Decline-Nachricht und/oder für den Fall, dass ein zuvor gespeichertes Präfix nicht mehr verfügbar ist, insbesondere, weil eine DHCPv6 Renew oder Rebind Operation fehlgeschlagen ist, von dem Router Router Advertisement Nachrichten mit einer More Specific Route Option, welche das zuletzt verfügbare Präfix enthält, deren Lebenszeit auf 0 gesetzt ist, insbesondere über ein upstream-Interface gesendet werden.

Dann werden weiterhin bevorzugt nach Ablauf einer vorgegebenen Zeit Router Advertisement Nachrichten ohne die More Specific Route Option mit dem wenigstens einen zuletzt verfügbaren Präfix insbesondere über ein upstream-Interface gesendet werden.

Die Specific-Route-Management-Funktionseinheit des erfindungsgemäßen Routers kann entsprechend ausgebildet und/oder eingerichtet sein, um die Sende-Funktionseinheit in Reaktion auf den Empfang wenigstens einer Decline-Nachricht und/oder für den Fall, dass ein zuvor gespeichertes Präfix nicht mehr verfügbar ist, bevorzugt automatisch zu konfigurieren, Router Advertisement Nachrichten mit einer More Specific Route Option, welche das zuletzt verfügbare Präfix enthält, deren Lebenszeit auf 0 gesetzt ist, insbesondere über ein upstream-Interface des Routers zu senden. Dies erfolgt besonders bevorzugt in Reaktion auf den Empfang wenigstens einer insbesondere von einem DHCPv6 Server gesendeten Decline-Nachricht insbesondere gemäß RFC 3315.

Über bevorzugt von einem DHCPv6 Server gesendete Decline-Nachrichten gemäß RFC 3315 kann einem Router kommuniziert werden, dass eines oder mehrere delegierte Präfixe (sofortig) abgekündigt sind.

Eine in Reaktion auf den Empfang wenigstens einer Decline-Nachricht gesendete wenigstens eine Router-Advertisement-Nachricht muss nicht sofort, ohne Verzögerung nach dem Erhalt der wenigstens einen Decline-Nachricht gesendet werden. Vielmehr kann es sein, dass diese verzögert zum Empfangszeitpunkt einer Decline-Nachricht gesendet wird, beispielsweise zu einem Zeitpunkt nach dem Eingang einer solchen, für den das Senden der nächsten Router-Advertise-Nachricht ohnehin geplant bzw. vorgesehen war oder auch zu einem anderen vorgegeben Zeitpunkt nach dem Empfang eines Declines.

Dann kann die Specific-Route-Management-Funktionseinheit weiterhin ausgebildet und/oder eingerichtet sein, um die Sende-Funktionseinheit nach Ablauf einer vorgegebenen Zeit insbesondere nach dem Empfang wenigstens einer Decline-Nachricht bevorzugt automatisch zu konfigurieren, Router Advertisement Nachrichten ohne die More Specific Route Option mit dem wenigstens einen zuletzt verfügbaren Präfix zu senden.

In der Regel wird ein Präfix bzw. werden - in dem Falle, dass mehr als ein Präfix an einen Router delegiert wird - werden Präfixe in einem Router, insbesondere von/in dessen DHCPv6 Client für eine vorgegebene Zeitspanne gespeichert. Die Zeitspanne entspricht zweckmäßiger Weise einer zu dem bzw. den Präfixen gehörenden Lebenszeit, die mit diesem bzw. diesen an den Router übermittelt wurde. Es kann wenigstens ein neues Präfix angefordert werden, bevor eines oder mehrere aktuell gespeicherte Präfixe "ablaufen". Dies muss jedoch nicht immer erfolgreich sein, so dass es auch passieren kann, dass (aktuell) kein Präfix in einem Router verfügbar ist. Auch vor dem Empfang eines oder mehrerer erster Präfixe ist (noch) kein Präfix in dem Router verfügbar.

Ist kein Präfix vorhanden, gehen insbesondere keine MSROs raus und steht nur eines, ggf. mehrere abgelaufene Präfixe zur Verfügung, werden bevorzugt Router Advertisements gesendet, die zwar weiterhin die MSROs enthalten, wobei die Lebenszeit jedoch auf null gesetzt ist. Hierdurch wird erreicht, dass mithörende Netzteilnehmer die Route sofort aktiv in ihren Routen-Tabellen löschen und erst dann die MSRO aus den Router Advertisements gelöscht wird. So wird sichergestellt, dass spezifische Routen auch wieder korrekt entfernt werden.

Besonders bevorzugt wird die Konfiguration der Sende-Funktionseinheit jeweils schrittweise geändert. Insbesondere wird die Sende-Funktionseinheit in einem ersten Schritt, wenn keine Präfixe verfügbar sind, konfiguriert, Router Advertisement Nachrichten ohne More Specific Route Option zu senden, in einem zweiten Schritt, wenn wenigstens ein Präfix verfügbar ist, insbesondere in Reaktion auf den Empfang wenigstens einer Confirm-Nachricht bevorzugt gemäß RFC 3315 wenigstens eine Router Advertisement Nachricht mit entsprechender More Specific Route Option zu senden und wenn das wenigstens eine Präfix nicht mehr verfügbar ist, insbesondere in Reaktion auf den Empfang wenigstens einer Decline-Nachricht bevorzugt gemäß RFC 3315, die Lebenszeit für das Abkündigen auf Null zu setzen.

Die Specific-Route-Management-Funktionseinheit des erfindungsgemäßen Routers kann selbstverständlich Software-implementiert sein. Die Specific-Route-Management-Funktionseinheit kann auch eine oder mehrere Hardware-Komponenten umfassen, auf welcher/welchen eine geeignete Software installiert sein kann. Es kann sich auch um eine reine Hardware-Komponente handeln.

In weiterer vorteilhafter Ausführungsform des Verfahrens ist vorgesehen, dass von wenigstens einem weiteren Teilnehmer des Netzwerkes, insbesondere wenigstens einem Nachbar-Teilnehmer des wenigstens einen Routers, wenigstens eine von dem wenigstens einen Router insbesondere über ein upstream-Interface gesendete Router-Advertisement-Nachricht mit einer More Specific Route Option, welche das wenigstens eine empfangene Präfix und/oder wenigstens eine spezifische Route für dieses enthält, empfangen wird, und bevorzugt der wenigstens eine weitere Teilnehmer auf Basis der wenigstens einen Router Advertisement Nachricht wenigstens eine spezifische Route einrichtet.

Ein weiterer Gegenstand der Erfindung ist ein Verfahren zur Datenkommunikation in einem industriellen Netzwerk, in dem wenigstens eine Route unter Durchführung des erfindungsgemäßen Verfahrens zum automatischen Konfigurieren von Routen automatisch konfiguriert wurde, und Daten zwischen dem wenigstens einen Router und wenigstens einem weiteren Teilnehmer direkt ohne Rückgriff auf einen überlagerten Router übertragen werden.

Gegenstand der vorliegenden Erfindung ist auch ein Steuerungsverfahren für einen industriellen technischen Prozess oder ein Fahrzeug, bei dem zwischen wenigstens zwei Komponenten einer Automatisierungsanlage Daten unter Durchführung des erfindungsgemäßen Verfahrens zur Datenkommunikation übertragen werden und auf Basis der übertragenen Daten eine Steuerung des industriellen technischen Prozesses oder Fahrzeugs erfolgt.

Weiterhin betrifft die Erfindung ein Computerprogramm, das Programmcodemittel zur Durchführung der Schritte des erfindungsgemäßen Verfahrens zum automatischen Konfigurieren von Routen bzw. des erfindungsgemäßen Verfahrens zur Datenkommunikation bzw. des erfindungsgemäßen Steuerungsverfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zum automatischen Konfigurieren von Routen bzw. des erfindungsgemäßen Verfahrens zur Datenkommunikation bzw. des erfindungsgemäßen Steuerungsverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Darstellung zum Netzaufbau aus dem klassischen IT-Bereich,
- FIG 2: eine rein schematische Darstellung zum Netzaufbau aus dem Bereich der industriellen Automatisierungstechnik,
- FIG 3: eine rein schematische Teildarstellung eines Netzwerkes einer industriellen Automatisierungsanlage mit mehreren Subnetzen mit konventionellen unterlagerten Routern,
- FIG 4: eine rein schematische Teildarstellung eines Netzwerkes einer industriellen Automatisierungsanlage mit mehreren Subnetzen mit unterlagerten Routern gemäß der vorliegenden Erfindung, und
- FIG 5: eine rein schematische, vergrößerte Blockbild-Darstellung eines unterlagerten Routers aus dem Netzwerk aus FIG 4.

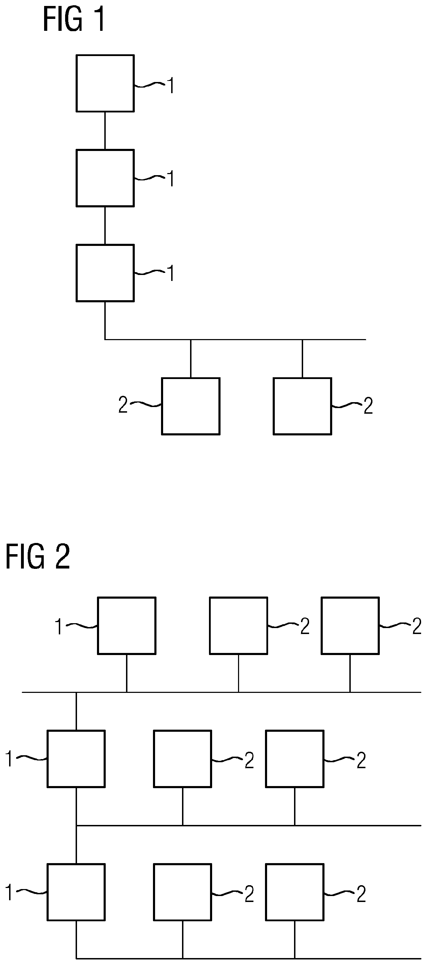

In der FIG 1 ist rein schematisch ein typischer Netzaufbau aus dem klassischen IT-Bereich gezeigt. Dargestellt sind (beispielhaft) drei Router 1 und zwei Endgeräte 2 eines Netzwerkes. Man sieht, dass sich die Endgeräte 2 ausschließlich auf dem hierarchisch untersten Subnetz befinden.

Der Netzaufbau im Bereich der industriellen Automatisierungstechnik ist hingegen vielfach derart, dass sich Endgeräte 2 nicht alleine in den hierarchisch untersten Subnetzen befinden, sondern auch auf anderen Ebenen einer Netz-Hierarchie, auf den Zwischenebenen zwischen Routern 1. Dies ist - erneut rein schematisch in FIG 2 gezeigt.

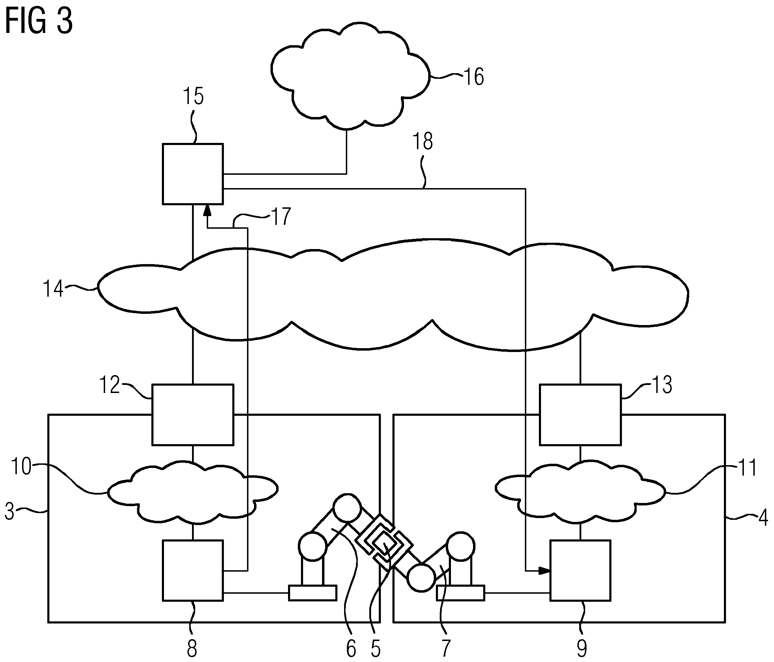

Zu diesem Bereich ist der Aufbau aus FIG 3 zu zählen. Die FIG 3 zeigt konkret in schematischer Darstellung einen Ausschnitt einer Produktionslinie in einer industriellen Fertigungsanlage, die aus mehreren Fertigungszellen besteht, von denen hier beispielhaft zwei Fertigungszellen 3, 4 gezeigt sind. Ein zu fertigendes Produkt 5 durchläuft der Reihe nach die verschiedenen Fertigungszellen 3, 4, um schrittweise fertiggestellt zu werden. Dabei wird das Produkt an einer oder auch mehreren Stellen - in der FIG 3 ist nur eine solche Stelle beispielhaft gezeigt - von einem Roboter 6 in einer Fertigungszelle 3 an einem weiteren Roboter 7 in der nachfolgenden Fertigungszelle 4 übergeben. Für diesen Übergabeprozess müssen die Roboter 6 und 7 miteinander koordiniert werden.

Jeder der Roboter 6, 7 verfügt über eine Steuerung 8, 9, die jeweils an ein eigenes Zellennetzwerk 10, 11 angeschlossen sind. Die beiden Zellennetzwerke 10, 11 sind in der Figur jeweils durch eine Wolke angedeutet. Die beiden Zellennetzwerke 10, 11 sind nicht direkt miteinander verbunden, sondern jeweils über einen eigenen Zellenrouter 12, 13 mit dem Produktionsnetz 14, welches ebenfalls durch eine Wolke angedeutet ist. Das Produktionsnetz 14 ist wiederum über einen Router 15 mit dem Firmennetzwerk 16 verbunden. Der Router 15 kann dabei auch die Funktion eines "delegating routers" gemäß RFC 3633 ausführen, was bei dem hier dargestellten Ausführungsbeispiel der Fall ist.

Eine konventionelle Konfiguration der Zellenrouter 12, 13 ist, diese nur mit einer sogenannten "default route" zum Router 15 zu konfigurieren. Erst der Router 15 kennt die Routen in die einzelnen Zellennetze 10 und 11. Eine Kommunikation zwischen den Robotersteuerungen 8, 9 muss daher immer über den überlagerten Zellenrouter 15 erfolgen. In der FIG 3 ist dies schematisch über einen Pfeil 17, der von der Robotersteuerung 8 über das Zellennetzwerk 10, den Router 12 und das Produktionsnetzwerk 14 bis zum Router 15 zeigt, sowie einen weiteren Pfeil 18, welcher von dem Router 15 durch das Produktionsnetz 14, den Router 13, und das Zellennetz 11 zu der Robotersteuerung 9 zeigt, angedeutet.

Nachteilig hieran ist, dass bei einem Ausfall des Routers 15 die Kommunikation zwischen den Robotersteuerungen 8 und 9 ebenfalls auffällt. Im ungünstigsten Fall kann dies zu einem vollständigen Produktionsstopp und kostenintensiven Ausfällen führen.

Insbesondere im Sinne einer verbesserten Betriebs- und Ausfallsicherheit würde es einen erheblichen Vorteil darstellen, wenn die Zellenrouter 12, 13 direkt miteinander kommunizieren könnten, und damit auch die Robotersteuerungen 8, 9 ohne ihre Kommunikation über den Router 15 führen zu müssen.

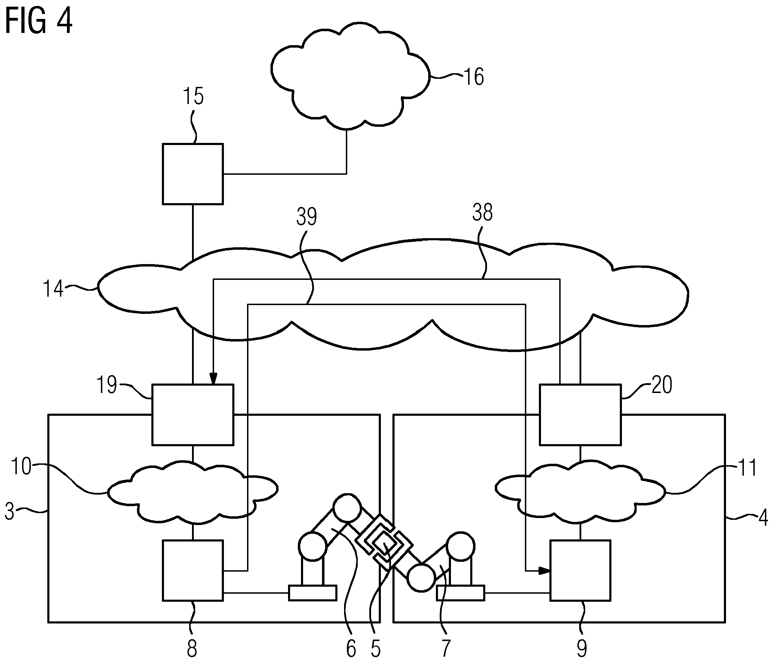

Um dies zu erreichen, kommen anstelle der beiden unterlagerten Routern 12, 13 gemäß FIG 3 zwei Router 19, 20 zum Einsatz, welche Ausführungsbeispiele erfindungsgemäßer Router darstelle. Dies ist in FIG 4 - wiederum rein schematisch - dargestellt. Mit Ausnahme der Tatsache, dass für die beiden Zellennetze 3 und 5 jeweils ein Router 19, 20 gemäß der vorliegenden Erfindung zum Einsatz kommt, stimmt die Anordnung mit derjenigen gemäß FIG 3 überein und gleiche Komponenten sind mit gleichen Bezugszeichen versehen.

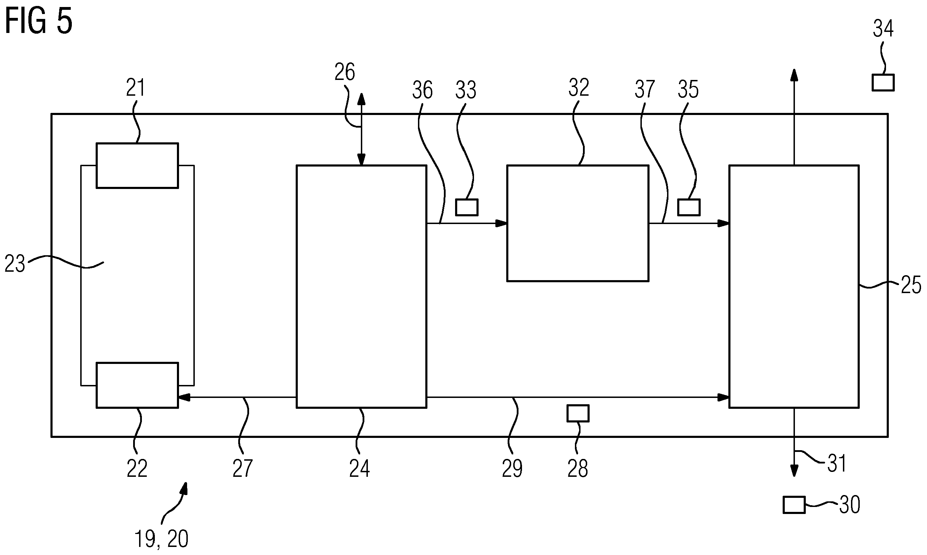

In der FIG 5 ist eine vergrößerte, rein schematische Darstellung der Router 19, 20 mit umfassten Funktionseinheiten gezeigt, wobei, da die beiden Router 19, 20 identisch ausgestaltet und eingerichtet sind, nur ein Router 19, 20 beispielhaft dargestellt ist.

In der FIG 5 zu erkennen ist ein upstream-Interface 21, ein downstream-Interface 22 und einen IP-Stack 23 der Router 19, 20. Jeder der beiden Router 19, 20 umfasst weiterhin einen DHCPv6 PD (Prefix Delegation) Client 24 und eine Sende-Funktionseinheit 25, die ausgebildet und eingerichtet ist, um Router Advertisement Nachrichten zu senden. Die Sende-Funktionseinheit 25 ist für das korrekte Abwickeln des Router-Advertisement-Protokolls ausgebildet und eingerichtet. Im Rahmen des hier beschriebenen Ausführungsbeispiels ist diese als Software auf einer "universellen" Ausführungs-Hardware in Form eines Prozessors/einer CPU, konkret einer Standard-/"All-Purpose"-CPU gegeben.

Die vorgenannten Komponenten umfassen auch die konventionellen Router 12, 13 aus FIG 3.

Für die Konfiguration von Routen erfolgt eine Präfix Delegation gemäß RFC 3316 (Request for Comments Nummer 3316 der Internet Engineering Task Force, https://tools.ietf.org/html/rfc3316). Dafür fragt der DHCPv6 PD Client 24 eines Routers 12, 13, 19, 20 bei dem überlagerten Router 15 (vgl. Figuren 3 und 4) wenigstens ein Präfix an. Der Router 15 antwortet mit einem delegierten /64 Präfix, was von dem DHCPv6 PD Client 24 des Routers 12, 13, 19, 20 empfangen wird. In der FIG 5 ist die Präfix Delegation mit Anfrage und Antwort durch einen Doppelpfeil 26 angedeutet.

Das Präfix wird in dem DHCPv6 PD Client 24 gespeichert und zwar für eine Dauer, welche der zusammen mit Präfix übermittelten, zu diesem gehörenden Lebenszeit, insbesondere der sogenannten Lebenszeit des Präfixes entspricht. Danach wird ein gespeichertes Präfix gelöscht.

Das /64 Präfix wird an der unterlagerten Netzwerk-Schnittstelle per Router Advertisement in Form einer sogenannten Prefix Information Option (PIO) zur Adress-Autokonfiguration (Stateless Address Autoconfiguration -SLAAC) in den angeschlossenen Endgeräten bekanntgegeben.

In der Figur 5 ist durch einen von dem DHCPv6 PD Client 24 zu dem downstream-Interface 22 weisenden Pfeil 27 der SLAAC-Vorgang angedeutet. Die PIO 28 wird an die Sende-Funktionseinheit 25 übergeben, was mit dem Pfeil angedeutet ist, und die Sende-Funktionseinheit 25 sendet Router Advertisements 30 mit der PIO 28 über das downstream-Interface 22. Das Senden der Router Advertisements 30 mit PIO 28 über das downstream-Interface 22 ist in der Figur 5 mit einem von der Sende-Funktionseinheit 25 abgehenden, nach unten weisenden Pfeil 31 angedeutet.

Die Router 19, 20 aus FIG 4, welche Ausführungsbeispiele erfindungsgemäßer Router darstellen, weisen zusätzlich zu den vorstehen beschriebenen Komponenten bzw. Funktionseinheiten eine Specific-Route-Management-Funktionseinheit 32 auf. Im Rahmen des hier beschriebenen Ausführungsbeispiels ist diese als Software auf einer "universellen" Ausführungs-Hardware in Form eines Prozessors/einer CPU, konkret einer Standard-/"All-Purpose"-CPU gegeben. Es handelt sich vorliegend um die gleiche CPU, auf welcher auch die Software für die Sende-Funktionseinheit 24 ausgeführt wird. Es kann aber natürlich auch eine andere CPU sein.

Die Specific-Route-Management-Funktionseinheit 32 ist ausgebildet und eingerichtet, um Präfixe 33, welche von dem DHCPv6 PD Client 24 empfangen wurden, übergeben zu bekommen, und um die Sende-Funktionseinheit 25 des Routers 19, 20 automatisch zu konfigurieren, wenigstens eine Router-Advertisement-Nachricht 34 mit einer More Specific Route Option 35, welche ein empfangenes Präfix 33 und/oder wenigstens eine spezifische Route für dieses enthält, über das upstream-Interface 21 des Routers 19, 20 zu senden. Dabei wird eine Lebenszeit für die More Specific Route Option 35 angegeben, die entsprechend der Leasing Time des wenigstens einen empfangenen Präfixes 33 gewählt ist.

In der FIG 5 ist dies durch einen Pfeil 36, welcher den DHCPv6 PD Client 24 mit der Specific Route Management Funktionseinheit 32 verbindet und oberhalb von dem ein ein Präfix repräsentierendes, mit dem Bezugszeichen 33 versehenes Blockelement angedeutet ist, sowie einen weiteren Pfeil 37, welcher von der Specific Route Management Funktionseinheit 32 zu der Sende-Funktionseinheit 25 weist und oberhalb dem ein eine More Specific Route Option repräsentierendes, mit dem Bezugszeichen 35 versehenes weiteres Blockelement angeordnet ist, verdeutlicht.

Router Advertisement Nachrichten 34 werden von der Sende-Funktionseinheit 25 periodisch über das upstream-Interface 21 gesendet.

Bevor die Lebenszeit von einem delegierten Präfix abgelaufen ist, wird in der Regel ein neues bzw. wird die Verlängerung der Lebensdauer eines bereits erhaltenen Präfixes angefordert, insbesondere durch eine DHCPv6 Renew oder Rebind Operation gemäß (vgl. RFC 3315). Es kann passieren, dass kein Präfix verfügbar ist, etwa weil eine DHCPv6 Renew oder Rebind Operation fehlgeschlagen ist. Weiterhin wird insbesondere vor dem ersten Anfordern eines Präfixes (noch) gar kein Präfix in dem Router 19, 20 verfügbar sein, etwa bei einer ersten Inbetriebnahme.

Es sei angemerkt, dass selbstverständlich jeweils auch mehr als ein Präfix bei einem Server angefordert und/oder dem Router 19, 20 zugewiesen werden kann.

Für den Fall, dass insbesondere in einem Initialzustand noch kein Präfix 33 - insbesondere in einem Speicher des DHCPv6 PD Clients 24 - verfügbar ist, wird die Sende-Funktionseinheit 25 von der Specific-Route-Management-Funktionseinheit 32 konfiguriert, Router Advertisement Nachrichten ohne eine More Specific Route Option 35 über das upstream-Interface 21 des Routers 19, 20 zu senden.

Sobald wenigstens ein (neues) Präfix von dem DHCPv6 PD Client 24 des Routers 19, 20 empfangen wird, wird dieses der Specific-Route-Management-Funktionseinheit 32 übergeben und diese konfiguriert die Sende-Funktionseinheit 25 des Routers 19, 20 automatisch, wenigstens eine Router-Advertisement-Nachricht 34 mit einer More Specific Route Option 35, welche das (neue) Präfix 33 und/oder wenigstens eine spezifische Route für dieses enthält, über das upstream-Interface 21 des Routers 19, 20 zu senden. Die Specific-Route-Management-Funktionseinheit 32 ist hierfür entsprechend ausgestaltet und eingerichtet. Eines oder mehrere (neue) Präfixe sind insbesondere verfügbar, nachdem eine Confirm-Nachricht gemäß RFC 3315 insbesondere von dem DHCPv6 PD Clients 24 empfangen wurde .

Die Specific-Route-Management-Funktionseinheit 32 konfiguriert bevorzugt in Reaktion auf den Empfang wenigstens einer insbesondere von einem DHCPv6 Server gesendete Confirm-Nachricht die Sende-Funktionseinheit 25 des Routers 19, 20 automatisch, wenigstens eine Router-Advertisement-Nachricht 34 mit einer More Specific Route Option 35, welche das neue Präfix 33 und/oder wenigstens eine spezifische Route für dieses enthält, über das upstream-Interface 21 des Routers 19, 20 zu senden. Die wenigstens eine Router-Advertisement-Nachricht 34 mit einer More Specific Route Option 35, welche das (neue) Präfix 33 und/oder wenigstens eine spezifische Route für dieses enthält, wird vorliegend nicht unmittelbar nach Erhalt der Confirm-Nachricht gesendet, sondern zu einem Zeitpunkt, für den das nächstmalige Senden einer Router Advertisement Nachricht 34 ohnehin geplant war.

Wie vorstehend angemerkt, kann es sein, dass eines oder mehrere empfangene Präfixe nicht mehr verfügbar ist bzw. sind, weil etwa die Lebenszeit abgelaufen ist und diese insbesondere vom DHCPv6 PD Client 24 gelöscht wurden.

Die Specific-Route-Management-Funktionseinheit 32 ist daher weiterhin ausgebildet und eingerichtet, um die Sende-Funktionseinheit 25 für den Fall, dass ein zuvor gespeichertes Präfix 33 nicht mehr verfügbar ist, die Sende-Funktionseinheit 25 zu konfigurieren, Router Advertisement Nachrichten 34 mit einer More Specific Route Option 35, welche das zuletzt verfügbare Präfix 33 enthält, deren Lebenszeit jedoch auf 0 gesetzt ist, über das upstream-Interface 21 des Routers 19, 20 zu senden.

Dies geschieht in Reaktion auf den Empfang wenigstens einer bevorzugt von einem DHCPPv6 Server gesendeten Decline-Nachricht. Die Router Advertisement Nachricht 34 wird - genau wie im Falle der Empfangs einer Confirm-Nachricht mit Verzögerung, konkret zu dem Zeitpunkt gesendet, für den das nächstmalige Senden einer Router Advertisement Nachricht 34 ohnehin geplant war.

Ist eine Lebenszeit abgelaufen, werden in der Regel gemäß RFC 3315 bestimmte Nachrichten insbesondere von dem Router 19, 20 an den DHCPv6 Server gesendet, die entweder mit Confirm bestätigt werden, was bedeutet, dass das eine oder die mehreren Präfixe weiter verwendet werden dürfen, oder mit einer Decline-Nachricht des Servers sofort "abgekündigt" werden.

Die Specific-Route-Management-Funktionseinheit 32 ist weiterhin ausgebildet und eingerichtet, um die Sende-Funktionseinheit 25 nach Ablauf einer vorgegebenen Zeit nachdem ein zuvor gespeichertes Präfix 33 nicht mehr verfügbar ist, zu konfigurieren, Router Advertisement Nachrichten ohne die More Specific Route Option 35 mit dem zuletzt verfügbaren Präfix 33 zu senden.

Hierdurch wird sichergestellt, dass spezifische Routen auch wieder korrekt entfernt werden, indem zunächst die Router Lifetime auf 0 gesetzt wird, damit mithörende Netzteilnehmer die Route sofort aktiv in ihren Routen-Tabellen löschen, und erst danach die MSRO 35 aus den Router Advertisements 34 entfernt wird.

Die jeweilige Konfiguration der Sende-Funktionseinheit 25 ist für die vorgenannten Fälle, also den Fall, dass noch keine delegierten Präfixe verfügbar sind (Schritt 1) bzw. delegierte Präfixe verfügbar sind (Schritt 2) und delegierte Präfixe wieder abgekündigt werden (Schritt 3), beispielswiese konkret wie folgt:

```
 # radvd.conf
 # Schritt 1: vor dem Erhalt delegierter Präfixe
 interface upstream {
 ...
 # keine automatisch generierten Routen
 # route ::/64 { };
 };
 # radvd.conf
 # Schritt 2: nach dem Erhalt der delegierten Präfixe P1, P2,
 P3
 interface upstream {
 ...
 # automatisch generierte Routen anhand der Präfixe
 route 2001:db8:0:02fc::/63 { # delegierte Präfixe P1+P2
 AdvRouteLifetime 120; # entsprechend der valid lifetime von
 P1+P2
 } ;
 route 2001:db8:0:02fe::/64 { # delegiertes Präfix P3
 AdvRouteLifetime 240; # entsprechend der valid lifetime von
 P3
 } ;
 } ;
 # radvd.conf
 # Schritt 3: delegiertes Präfixe P1, P2, P3 werden entzogen
 interface upstream {
 ...
 # Abkündigung
 route 2001:db8:0:02fc::/63 { # delegierte Präfixe P1+P2
 AdvRouteLifetime 0;
 } ;
 route 2001:db8:0:02fe::/64 { # delegiertes Präfix P3
 AdvRouteLifetime 0;
 } ;
 };
```

Bei diesem Beispiel werden drei Präfixe P1, P2, P3 delegiert und anschließend wieder "abgekündigt". Die vorgenannte "valid lifetime" ist die "valid lifetime" gemäß RFC 3315, die zum jeweiligen Präfix bzw. den Präfixen gehört.

Die von dem (jeweiligen) Router 19, 20 über das upstream-Interface 21 gesendeten Router Advertisement Nachrichten 34 mit einer More Specific Route Option 35 mit dem (jeweils) verfügbaren wenigstens einen Präfix 33 werden von anderen unterlagerten Netzteilnehmern, insbesondere Nachbar-Teilnehmern empfangen. In der Figur 4 ist dies - beispielhaft - durch einen Pfeil 38 angedeutet, welcher von dem Router 20 zu dem zu diesem benachbarten Router 19 zeigt.

Über die Router Advertisement Nachrichten 34 geben die Router 19, 20 ihren Nachbarn, insbesondere Nachbar-Routern 19, 20, jeweils die über sie erreichbaren Zellennetze 10, 11 bekannt. Damit können die einzelnen Nachbar-Router 19, 20 automatisiert die gewünschten direkten Routen auf die Nachbar-Router 19, 20 bzw. Zellennetzwerke 10, 11 einrichten und aktuell halten.

Ein Routen des nachbarschaftlichen Zellenverkehrs über den zentralen Router 15 wird vermieden. Die Zellenrouter 19, 20 können Datenverkehr zwischen den beiden Robotersteuerungen 8, 9 direkt zwischen sich abwickeln. Dies ist in der FIG 4 beispielhaft durch den Pfeil 39 angedeutet, der von der Robotersteuerung 8 über die beiden Zellenrouter 19, 20 zu der Robotersteuerung 9 zeigt. Ein Datentransfer in die umgekehrte Richtung ist gleichermaßen möglich.

Durch die spezifischen Routen werden die Kommunikationspfade optimiert. Da für den Datenaustausch zwischen unterlagerten Teilnehmern ein Rückgriff auf überlagerte Router 15 nicht mehr nötig ist, hat ein potentieller Ausfall solcher keinerlei Auswirkungen auf die Kommunikation in unterlagerten Netzen, so dass im Ergebnis eine deutlich erhöhte Betriebs- und Ausfallsicherheit gewährleistet wird.

Es sei angemerkt, das bei dem hier beschriebenen Ausführungsbeispiel die beiden Router 19, 20 jeweils in Form von separaten Netzwerkgeräten gegeben sind, die nur die Routing-Funktion übernehmen. Alternativ dazu kann die Funktion auch in ein Gerät integriert sein, welches anderen Zwecken dient, etwa in eine Steuerung, z.B. eine speicherprogrammierbare Steuerung einer Automatisierungsanlage. Selbstverständlich ist es auch möglich, dass beispielsweise ein Computer, auf welchem entsprechend Software installiert ist, (wenigstens) einen Router gemäß der vorliegenden Erfindung darstellt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum automatischen Konfigurieren von Routen in einem insbesondere industriellen Netzwerk bevorzugt einer industriellen Automatisierungsanlage, bei dem von wenigstens einem unterlagerten Router (19, 20), insbesondere von einem DHCPv6 Client (24) dieses, wenigstens ein delegiertes Präfix (33) empfangen wird, und eine Sende-Funktionseinheit (25) des wenigstens einen unterlagerten Routers (19, 20) bevorzugt automatisch konfiguriert wird, wenigstens eine Router-Advertisement-Nachricht (34) mit einer More Specific Route Option (35), welche das wenigstens eine empfangene Präfix (33) und/oder wenigstens eine spezifische Route für dieses enthält, insbesondere über ein upstream-Interface (21) des wenigstens einen unterlagerten Routers (19, 20) zu senden.

2. Verfahren nach Anspruch 1,
**dadurch gekennzeichnet, dass** in der wenigstens einen Router Advertisement Nachricht (34), die insbesondere über ein upstream-Interface (21) gesendet wird, eine Lebenszeit für die More Specific Route Option (35) angegeben wird, die entsprechend einer Lebenszeit des wenigstens einen empfangenen Präfixes (33) gewählt ist.

3. Verfahren nach Anspruch 1 oder 2,
**dadurch gekennzeichnet, dass** für den Fall, dass sich das wenigstens eine Präfix (33) ändert, von dem wenigstens einen unterlagerten Router (19, 20) geänderte Router Advertisement Nachrichten (34) insbesondere über ein upstream-Interface (21) gesendet werden.

4. Verfahren nach einem der vorhergehenden Ansprüche,
**dadurch gekennzeichnet, dass** Präfixe (33), die von dem wenigstens einen unterlagerten Router empfangen wurden, insbesondere von einem DHCPv6 Client (24) dieses, für eine jeweils vorgegebene Dauer gespeichert und dann gelöscht werden

5. Verfahren nach einem der vorhergehenden Ansprüche,
**dadurch gekennzeichnet, dass** für den Fall, dass kein Präfix (33) verfügbar ist, von dem wenigstens einen unterlagerten Router (19, 20) Router Advertisement Nachrichten (34) ohne eine More Specific Route Option (35) insbesondere über ein upstream-Interface (21) gesendet werden.

6. Verfahren nach einem der vorhergehenden Ansprüche,
**dadurch gekennzeichnet, dass** in Reaktion auf den Empfang wenigstens einer Decline-Nachricht und/oder für den Fall, dass ein zuvor gespeichertes Präfix (33) nicht mehr verfügbar ist, insbesondere, weil eine DHCPv6 Renew oder Rebind Operation fehlgeschlagen ist, von dem wenigstens einen unterlagerten Router (19, 20) Router Advertisement Nachrichten (34) mit einer More Specific Route Option (35), welche das zuletzt verfügbare Präfix (33) enthält, deren Lebenszeit auf 0 gesetzt ist, insbesondere über ein upstream-Interface (21) gesendet werden.

7. Verfahren nach Anspruch 6,
**dadurch gekennzeichnet, dass** nach Ablauf einer vorgegebenen Zeit insbesondere nach dem Empfang wenigstens einer Decline-Nachricht Router Advertisement Nachrichten (34) ohne die More Specific Route Option (35) mit dem wenigstens einen zuletzt verfügbaren Präfix (33) insbesondere über ein upstream-Interface (21) gesendet werden.

8. Verfahren nach einem der vorhergehenden Ansprüche,
**dadurch gekennzeichnet, dass** es sich bei dem wenigstens einen unterlagerten Router (19, 20) um einen Subnetz-Router handelt und/oder das wenigstens eine von dem wenigstens einen unterlagerten Router (19, 20) empfangene Präfix (33) ein Subnetz-Präfix ist.

9. Verfahren nach einem der vorhergehenden Ansprüche,
**dadurch gekennzeichnet, dass** das wenigstens eine Präfix (33), welches von dem wenigstens einen unterlagerten Router (19, 20) empfangen wird, von einem überlagerten Router (15) gesendet wird bzw. wurde, und/oder das wenigstens eine Präfix (33), welches von dem wenigstens einen unterlagerten Router (19, 20) empfangen wird, von dem unterlagerten Router (19, 20) zuvor angefordert wurde.

10. Verfahren nach einem der vorhergehenden Ansprüche,
**dadurch gekennzeichnet, dass** von dem wenigstens einen unterlagerten Router (19, 20) periodisch Router Advertisement Nachrichten (34) gesendet werden, und/oder periodisch Präfixe (33) angefordert und/oder empfangen werden.

11. Verfahren nach einem der vorhergehenden Ansprüche,
**dadurch gekennzeichnet, dass** für den Fall, dass wenigstens ein neues Präfix (33) verfügbar ist, von dem wenigstens einen unterlagerten Router (19, 20) Router Advertisement Nachrichten (43) mit einer More Specific Route Option (35), welche das wenigstens eine neue Präfix (33) enthält, insbesondere über ein upstream-Interface (21) gesendet werden.

12. Verfahren nach einem der vorhergehenden Ansprüche,
**dadurch gekennzeichnet, dass** wenigstens eine von dem wenigstens einen unterlagerten Router (19, 20) insbesondere über ein upstream-Interface (21) gesendete Router-Advertisement Nachricht (34) mit einer More Specific Route Option (35), welche das wenigstens eine empfangene Präfix (33) und/oder wenigstens eine spezifische Route für dieses enthält, von wenigstens einem weiteren Teilnehmer (19, 20) des Netzwerkes, insbesondere wenigstens einem Nachbar-Teilnehmer des wenigstens einen unterlagerten Routers (19, 20), empfangen wird, und bevorzugt der wenigstens eine weitere Teilnehmer (19, 20) auf Basis der wenigstens einen Router Advertisement Nachricht (34) wenigstens eine spezifische Route einrichtet.

13. Verfahren zur Datenkommunikation in einem industriellen Netzwerk, in dem wenigstens eine Route unter Durchführung des Verfahrens nach einem der Ansprüche 1 bis 12 automatisch konfiguriert wurde, und Daten zwischen dem wenigstens einen unterlagerten Router (19, 20) und wenigstens einem weiteren Teilnehmer (19, 20) direkt ohne Rückgriff auf einen überlagerten Router (15) übertragen werden.

14. Steuerungsverfahren für einen industriellen technischen Prozess oder ein Fahrzeug, bei dem zwischen wenigstens zwei Komponenten einer Automatisierungsanlage Daten unter Durchführung des Verfahrens nach Anspruch 13 übertragen werden und auf Basis der übertragenen Daten eine Steuerung des industriellen technischen Prozesses oder Fahrzeugs erfolgt.

15. Router (19, 20), der zur Durchführung des Verfahrens nach einem der vorhergehenden Ansprüche ausgestaltet und eingerichtet ist.

16. Router (19, 20) nach Anspruch 15,
**dadurch gekennzeichnet, dass** der Router (19, 20) eine Specific-Route-Management-Funktionseinheit (32) umfasst, welche ausgebildet und/oder eingerichtet ist, um von dem Router (19, 20), insbesondere einem DHCPv6 Client (24) dieses empfangene Präfixe (33) übergeben zu bekommen, und um eine Sende-Funktionseinheit (25) des Routers (19, 20) automatisch zu konfigurieren, wenigstens eine Router-Advertisement-Nachricht (34) mit einer More Specific Route Option (35), welche das wenigstens eine empfangene Präfix (33) und/oder wenigstens eine spezifische Route für dieses enthält, insbesondere über ein upstream-Interface (21) des Routers (19, 20) zu senden.

17. Router (19, 20) nach Anspruch 16,
**dadurch gekennzeichnet, dass** der Router (19, 20), insbesondere ein DHCPv6 Client (24) dieses ausgebildet und/oder eingerichtet ist, um empfangene Präfixe (33) für eine jeweils vorgegeben Dauer zu speichern und dann zu löschen.

18. Router nach einem der Ansprüche 15 bis 17,
**dadurch gekennzeichnet, dass** die Specific-Route-Management-Funktionseinheit (32) ausgebildet und/oder eingerichtet ist, um die Sende-Funktionseinheit (25) für den Fall, dass kein Präfix (33) in dem Router (19, 20) verfügbar ist, bevorzugt automatisch zu konfigurieren, Router Advertisement Nachrichten (34) ohne eine More Specific Route Option (35) insbesondere über ein upstream-Interface (21) des Routers (19, 20) zu senden.

19. Router (19, 20) nach einem der Ansprüche 15 bis 18,
**dadurch gekennzeichnet, dass** die Specific-Route-Management-Funktionseinheit (32) ausgebildet und/oder eingerichtet ist, um die Sende-Funktionseinheit (25) in Reaktion auf den Empfang wenigstens einer Decline-Nachricht und/oder für den Fall, dass ein zuvor gespeichertes Präfix (33) nicht mehr verfügbar ist, bevorzugt automatisch zu konfigurieren, Router Advertisement Nachrichten (43) mit einer More Specific Route Option (35), welche das zuletzt verfügbare Präfix (33) enthält, deren Lebenszeit auf 0 gesetzt ist, insbesondere über ein upstream-Interface (21) des Routers (19, 20) zu senden.

20. Router (19, 20) nach Anspruch 19,
**dadurch gekennzeichnet, dass** die Specific-Route-Management-Funktionseinheit (32) ausgebildet und/oder eingerichtet ist, um die Sende-Funktionseinheit (25) nach Ablauf einer vorgegebenen Zeit bevorzugt automatisch zu konfigurieren, Router Advertisement Nachrichten (34) ohne die More Specific Route Option (35) mit dem wenigstens einen zuletzt verfügbaren Präfix (33) zu senden.

21. Computerprogramm umfassend Programmcode-Mittel zur Durchführung des Verfahrens nach einem der Ansprüche 1 bis 14.

22. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 14 durchzuführen.
